# EUROPEAN PATENT APPLICATION

(11) **EP 4 741 188 A1**
(43) Date of publication of application: **13.05.2026**
(21) Application number: 25215011.5
(22) Date of filing: 11.11.2025
(51) Int. Cl.: B60H 1/00, C09K 5/04

(54) **HEATING CONTROL METHOD FOR VEHICLE AND SYSTEM THEREOF**

(30) Priority: 11.11.2024 KR 20240159307
(71) Applicant: SK Innovation Co., Ltd., Seoul 03188 (KR); SK On Co., Ltd., Seoul 03161 (KR)
(72) Inventor: NOH, Ji Seong, 34124 Daejeon (KR); LEE, Su Jin, 34124 Daejeon (KR)
(74) Representative: Prüfer & Partner mbB Patentanwälte · Rechtsanwälte

(57) **Abstract**

Disclosed are a method for controlling heating of an HVAC system for an electric vehicle and an HVAC system thereof, the system comprising a refrigerant, a compressor (120) and a heater core (130), wherein the system is configured to circulate said refrigerant through the compressor (120) and the heater core (130) to perform heating control of the vehicle;wherein the refrigerant comprises at least one selected from the group consisting of a natural refrigerant; a hydrofluorocarbon (HFC)-based refrigerant;a hydrofluoroolefin (HFO)-based refrigerant;a hydrochlorofluorocarbon (HCFC)-based refrigerant;a hydrocarbon-based refrigerant that is not a natural refrigerant; anda halon or a perfluorocarbon (PFC)-based refrigerant.

## Description

### BACKGROUND

### Technical Field

The present disclosure relates generally to heating control for a vehicle, and more particularly, to a heating control method and a system thereof. The present disclosure further relates to the use of a heating control system as disclosed herein in an electric vehicle, and to an electric vehicle that comprises a heating control system as disclosed herein.

### Technical Considerations

An automotive heating, ventilation, and air conditioning (HVAC) system is generally configured to heat and cool the air within a passenger cabin to ensure occupant comfort. Such systems may be configured to selectively switch between air sources, such as fresh outside air and recirculated cabin air. Some systems draw in a mixture of this outside and inside air, condition it, and then supply the conditioned air into the cabin.

The automotive HVAC system includes a condenser and a heat core disposed within an HVAC casing. The HVAC casing has an inlet through which air is introduced and a plurality of outlets for discharging the air into the passenger cabin. For cooling the cabin temperature, the condenser exchanges heat with air blown by a cooling fan to introduce the cooled air into the passenger cabin. For heating the cabin temperature, the heat core may exchange heat with air provided by a blower fan to introduce the heated air into the passenger cabin.

In an electric vehicle, since most of the heating or cooling of the HVAC system must rely on battery power, operating the heating or cooling system causes a sharp increase in battery consumption. This may lead to a degradation in the performance of the electric vehicle or a reduction in the expected driving range.

In particular, if there is a large temperature difference from a target temperature when starting the vehicle, the heating or cooling system consumes more battery power to quickly reach the target temperature. This increases initial battery consumption, which shortens the drivable range and leads to more frequent charging cycles, thereby causing inconvenience to the driver.

### SUMMARY

Embodiments of the present disclosure may provide a method for efficiently controlling heating of a vehicle based on a temperature of a refrigerant and a temperature of air flowing into an interior of the vehicle, and a system for implementing the same.

Problems to be solved through various embodiments are not limited to the above-described problems, and other problems not described above will be clearly understood by those skilled in the art from the following description.

According to an aspect of the present disclosure, there is provided a heating control method for a vehicle, the heating control method is performing heating control by using a refrigerant , wherein the refrigerant comprises at least one selected from the group consisting of a natural refrigerant; a hydrofluorocarbon (HFC)-based refrigerant ; a hydrofluoroolefin (HFO)-based refrigerant; a hydrochlorofluorocarbon (HCFC)-based refrigerant; a hydrocarbon-based refrigerant that is not a natural refrigerant; and a halon or a perfluorocarbon (PFC)-based refrigerant.

In some non-limiting embodiments, the natural refrigerant may include at least one selected from the group consisting of: methane (R-50), ammonia (R-717), carbon dioxide (R-744), ethane (R-170), and propane (R-290).

In some non-limiting embodiments, the hydrofluorocarbon (HFC)-based refrigerant is a saturated hydrofluorocarbon (HFC)-based refrigerant and may preferably include at least one selected from the group consisting of: difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), and 1,1,1,3,3-pentafluorobutane (R-365mfc).

In some non-limiting embodiments, the hydrofluoroolefin (HFO)-based refrigerant may include at least one selected from the group consisting of: 1,1,2-triffuoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), and 1,2,3,3,3-pentafluoropropene (R-1225ye).

In some non-limiting embodiments, the hydrochlorofluorocarbon (HCFC)-based refrigerant may include at least one selected from the group consisting of: difluorochloromethane (R-22), chlorotetrafluoroethane (R-124), and 1-chloro-1,1-difluoroethane (R-142b).

In some non-limiting embodiments, the hydrocarbon-based refrigerant that is not a natural refrigerant may include at least one selected from the group consisting of: propylene (R-1270), isobutane (R-600a), dimethyl ether, isopentane, and pentane.

In some non-limiting embodiments, the halon or the perfluorocarbon (PFC)-based refrigerant may include at least one selected from the group consisting of: trifluoroiodomethane (R-13I1), octafluoropropane (R-218), and octafluorocyclobutane (RC318).

In some non-limiting embodiments, the heating control of the vehicle based on the refrigerant may comprise: operating an air conditioning system in a heating mode based on a target temperature set according to user input; controlling a post-compression temperature of the refrigerant, a flow rate of the refrigerant passing through a heater core, and a rotation speed of a blower fan supplying air to the heater core, based on a difference value between the target temperature and an indoor temperature of the vehicle; and controlling the rotation speed of the blower fan based on a temperature of the air that has passed through the heater core, or operating an electronic heating element for heating the air passing through the heater core, after a preset time elapses.

In some non-limiting embodiments, the controlling of the post-compression temperature of the refrigerant, the flow rate of the refrigerant, and the rotation speed of the blower fan may comprise: compressing the refrigerant so that the temperature of the refrigerant satisfies a preset maximum temperature; controlling the flow rate of the refrigerant so that the compressed refrigerant passes through the heater core at a preset minimum flow rate; and controlling the rotation speed of the blower fan to a minimum rotation speed, when a difference between the target temperature and the indoor temperature of the vehicle exceeds a preset temperature.

In some non-limiting embodiments, the controlling the rotation speed of the blower fan or operating the electronic heating element may comprise: measuring a temperature of the air that has passed through the heater core, after a preset time has elapsed; incrementally increasing the rotation speed of the blower fan when the temperature of the air that has passed through the heater core reaches a limit temperature; and heating the air passing through the heater core based on an electronic heating element when the temperature of the air that has passed through the heater core has not reached the limit temperature.

According to another aspect of the present disclosure, there is provided a heating control system for a vehicle, the system comprising: a refrigerant, a compressor and a heater core, wherein the heating control system is configured to circulate said refrigerant as disclosed herein through the compressor and the heater core to perform heating control of the vehicle; wherein the refrigerant comprises at least one selected from the group consisting of: a natural refrigerant; a hydrofluorocarbon (HFC)-based refrigerant which is a saturated hydrofluorocarbon (HFC)-based refrigerant; a hydrofluoroolefin (HFO)-based refrigerant; a hydrochlorofluorocarbon (HCFC)-based refrigerant; a hydrocarbon-based refrigerant that is not a natural refrigerant ; and a halon or a perfluorocarbon (PFC)-based refrigerant.

In some non-limiting embodiments, the natural refrigerant may include at least one selected from the group consisting of: methane (R-50), ammonia (R-717), carbon dioxide (R-744), ethane (R-170), and propane (R-290).

In some non-limiting embodiments, the hydrofluorocarbon (HFC)-based refrigerant which is a saturated hydrofluorocarbon (HFC)-based refrigerant may include at least one selected from the group consisting of: difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1 ,3,3-pentafluoropropane (R-245fa), and 1,1,1,3,3-pentafluorobutane (R-365mfc).

In some non-limiting embodiments, the hydrofluoroolefin (HFO)-based refrigerant may include at least one selected from the group consisting of: 1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), and 1,2,3,3,3-pentafluoropropene (R-1225ye).

In some non-limiting embodiments, the hydrochlorofluorocarbon (HCFC)-based refrigerant may include at least one selected from the group consisting of: difluorochloromethane (R-22), chlorotetrafluoroethane (R-124), and 1-chloro-1,1-difluoroethane (R-142b).

In some non-limiting embodiments, the hydrocarbon-based refrigerant that is not a natural refrigerant may include at least one selected from the group consisting of: propylene (R-1270), isobutane (R-600a), dimethyl ether, isopentane, and pentane.

In some non-limiting embodiments, the halon or the perfluorocarbon (PFC)-based refrigerant may include at least one selected from the group consisting of: trifluoroiodomethane (R-13I1), octafluoropropane (R-218), and octafluorocyclobutane (RC318).

In some non-limiting embodiments, the heating control system may comprise: a control panel configured to set a target temperature for an interior of the vehicle; the compressor configured to compress the refrigerant; a flow rate controller configured to control a flow rate of the refrigerant; the heater core configured to release heat from the compressed refrigerant; a blower fan configured to supply air to the heater core; a pipe configured such that the refrigerant is charged in and circulates through the compressor and the heater core; a first temperature sensor configured to measure a temperature of the compressed refrigerant; a second temperature sensor configured to measure a temperature of air released from the heater core; a third temperature sensor configured to measure an indoor temperature of the vehicle; and a processor configured to: operate an air conditioning system of the vehicle in a heating mode based on the target temperature set according to user input, control a post-compression temperature of the refrigerant, the flow rate of the refrigerant passing through the heater core, and a rotation speed of the blower fan, based on a difference value between the target temperature and the indoor temperature measured via the third temperature sensor, and control the rotation speed of the blower fan based on the temperature of the air that has passed through the heater core, or operate an electronic heating element for heating the air passing through the heater core, after a preset time elapses.

In some non-limiting embodiments, the processor may be further configured to: compress the refrigerant via the compressor so that the temperature of the refrigerant satisfies a preset maximum temperature; control the flow rate of the refrigerant via the flow rate controller so that the compressed refrigerant passes through the heater core at a preset minimum flow rate; and control the rotation speed of the blower fan to a minimum rotation speed, when a difference between the target temperature and the indoor temperature of the vehicle exceeds a preset temperature.

In some non-limiting embodiments, the heating control system may further comprise an electronic heating element configured to heat the air that has passed through the heater core; wherein the processor is further configured to: measure a temperature of the air that has passed through the heater core via the second temperature sensor, after a preset time has elapsed; incrementally increase the rotation speed of the blower fan when the temperature of the air that has passed through the heater core reaches a limit temperature; and heat the air passing through the heater core based on the electronic heating element when the temperature of the air that has passed through the heater core has not reached the limit temperature.

According to another aspect of the present disclosure, there is disclosed the use of a heating control method as disclosed herein, in an electric vehicle.

According to another aspect of the present disclosure, there is provided an electric vehicle, comprising the heating control system as disclosed herein.

In some non-limiting embodiments, an effect of improving the heat exchange efficiency of the heater core is provided by controlling the flow rate of the refrigerant, the rotation speed of the blower fan, or the speed of the refrigerant, based on the temperature of the air heated while passing through the heater core reaching a limit temperature, until the indoor temperature reaches the target temperature.

In some non-limiting embodiments, an effect of improving the indoor heating efficiency of an electric vehicle is provided by controlling the operation of the compressor that compresses the refrigerant and the operation of the blower for heat exchange of the heater core, through the method and system for controlling vehicle heating.

In some non-limiting embodiments, an effect of allowing the indoor temperature to quickly reach the target temperature is provided by controlling the compression of the refrigerant and the operation of the blower according to the set target temperature, through the method and system for controlling the heating of the air conditioning system.

### BRIEF DESCRIPTION OF THE DRAWINGS

The above and other objects, features and other advantages of the embodiments of the present disclosure will be more clearly understood from the following detailed description taken in conjunction with the accompanying drawings, in which:
FIG. 1 is a diagram schematically illustrating components for an operation of an air conditioning system, according to some non-limiting embodiments of the present disclosure.
FIG. 2 is a flowchart illustrating a flow of operations for performing heating control of an electric vehicle in an air conditioning system, according to some non-limiting embodiments of the present disclosure.
FIG. 3 is a flowchart illustrating a detailed flow of operations for performing heating control of an electric vehicle in an air conditioning system, according to some non-limiting embodiments of the present disclosure.
FIG. 4 is a flowchart illustrating a detailed flow of operations for performing heating control of an electric vehicle in an air conditioning system, according to other non-limiting embodiments of the present disclosure.

### DETAILED DESCRIPTION

Hereinafter, embodiments of the present disclosure will be described in detail with reference to the accompanying drawings. However, since various changes may be made in the embodiments, the scope of the present disclosure is not limited or restricted by these embodiments. It should be understood that all modifications, equivalents, and alternatives for the embodiments are included in the scope of the present disclosure. For example, it is to be understood that the embodiments of the present disclosure include various alternative variations and step sequences, except where expressly specified to the contrary. It is also to be understood that the specific devices and processes illustrated in the attached drawings, and described in the following detailed description, are simply illustrative and describe non-limiting embodiments of the disclosed subject matter. Hence, specific dimensions and other physical characteristics related to the embodiments disclosed herein are not to be considered as limiting.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "comprise", "comprises", "comprising", "include", "includes", "including", "has," "have," "having," or the like are intended to be open-ended terms. Further, the phrase "based on" is intended to mean "based at least partially on" unless explicitly stated otherwise. In addition, reference to an action being "based on" a condition may refer to the action being "in response to" the condition. For example, the phrases "based on" and "in response to" may, in some non-limiting embodiments, refer to a condition for automatically triggering an action (e.g., a specific operation of an electronic device, such as a computing device, a processor, and/or the like).

It will be understood that when a component is described to as being "connected," "combined" or "coupled" to another component, the component may be directly connected or coupled to the another component, or it may be "connected," "combined" or "coupled" to the other component by an intervening other component that may be present.

Further, in describing the components of the embodiment, the meaning of "or" may mean each of the components, may mean two or more of the components, or may mean all of the components. For example, it should be understood that the expressions "a, b or c" represent any one of "a," "b," "c," "a and b," "a and c," "b and c," and "a, b and c."

Components comprised in one embodiment and components comprising common functions will be described using the same names in other embodiments. The description given in one embodiment may be applied to other embodiments, and therefore will not be described in detail within the overlapping range, unless there is a description opposite thereto.

The device and/or 'data' processed by the device may be expressed in terms of "information". Here, the information may be used as a concept comprising the data.

The present disclosure may describe a heating control method for a vehicle and a system thereof (e.g., an air conditioning system). Here, the vehicle may include an electric vehicle that drives wheels based on electric power stored in a chargeable accumulator, such as a lithium-ion battery, as a vehicle that drives wheels using a motor.

Hereinafter, through various embodiments of the present disclosure, a method and system for supplying warm air into the interior of an electric vehicle (hereinafter, vehicle) for heating the interior (e.g., passenger cabin) in the electric vehicle and controlling the indoor temperature may be described. However, the present disclosure is not limited thereto, and the heating control method and system may also be applied to interior heating of an internal combustion engine vehicle.

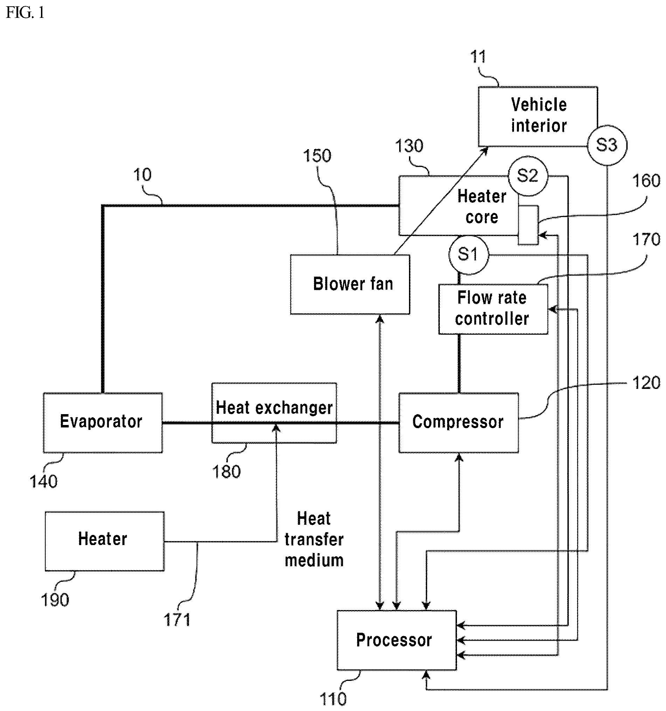

In this regard, FIG. 1 schematically illustrates components for an operation of an air conditioning system according to an embodiment of the present disclosure.

A system for controlling heating of an electric vehicle, also referred to herein as heating control system (hereinafter, air conditioning system) 100 may be configured to include a processor 110 that controls the operation of the air conditioning system. According to various embodiments of the present disclosure, the system for controlling heating of an electric vehicle may be described as the air conditioning system 100. However, the air conditioning system 100 may be configured to include a system for controlling cooling of the vehicle interior. Based on this, the air conditioning system 100 may control a heating mode (and/or a cooling mode) for heating, ventilation, and air conditioning (HVAC) inside the vehicle via the processor 110.

Here, the air conditioning system 100 may be configured to include a compressor 120, a heater core 130, an evaporator 140, and a blower fan 150, and further include a pipe 10 connecting the compressor 120, the evaporator 140, and the heater core 130, and a refrigerant flowing through the pipe 10.

In exemplary embodiments, the refrigerant may include a natural refrigerant, a hydrofluorocarbon (HFC)-based refrigerant, a hydrofluoroolefin (HFO)-based refrigerant, a hydrochlorofluorocarbon (HCFC)-based refrigerant, a hydrocarbon-based refrigerant that is not a natural refrigerant, a halon or a perfluorocarbon (PFC)-based refrigerant, and the like. These may be used alone or in combination of two or more.

Here, the natural refrigerant may include methane (R-50), ammonia (R-717), carbon dioxide (R-744), ethane (R-170), propane (R-290), and the like.

The hydrofluorocarbon (HFC)-based refrigerant is a saturated hydrofluorocarbon (HFC)-based refrigerant and preferably includes difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), 1,1,1,3,3-pentafluorobutane (R-365mfc), and the like.

The hydrofluoroolefin (HFO)-based refrigerant may include 1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), 1,2,3,3,3-pentafluoropropene (R-1225ye), and the like.

The hydrochlorofluorocarbon (HCFC)-based refrigerant may include difluorochloromethane (R-22), chlorotetrafluoroethane (R-124), 1-chloro-1,1-difluoroethane (R-142b), and the like.

The hydrocarbon-based refrigerant that is not a natural refrigerant may include propylene (R-1270), isobutane (R-600a), dimethyl ether, isopentane, pentane, and the like.

The halon or perfluorocarbon (PFC)-based refrigerant may include trifluoroiodomethane (R-13I1), octafluoropropane (R-218), octafluorocyclobutane (RC318), and the like.

The refrigerant may pass through the pipe 10, the compressor 120, the heater core 130, and the evaporator 140, and may provide heat for supplying warm air to the interior 11 of the vehicle.

To this end, the compressor 120 may compress the refrigerant and discharge the compressed refrigerant toward the heater core 130. Based on this, the refrigerant discharged from the compressor 120 may pass through the heater core 130 and the evaporator 140, and then move back to the compressor 120 to be circulated.

To explain in more detail, the compressor 120 may convert a low-temperature and low-pressure gaseous refrigerant into a high-temperature and high-pressure gaseous refrigerant by increasing the pressure (or compressing it), and supply it to the heater core 130.

According to an embodiment, the compressor 120 may be configured to be capable of controlling the temperature of the refrigerant flowing out from the compressor 120 by controlling a rotation speed (revolutions per minute (rpm) or revolutions per second (prs)) (or cylinder pressure (pascal (Pa), atmosphere (atm), pounds per square inch (psi), or bar)) and/or a compression ratio.

The compressor 120 may be configured to include at least one temperature sensor that measures the temperature of the compressed refrigerant, and/or at least one pressure sensor that measures the pressure of the compressed refrigerant.

The heater core 130 may be configured to release heat from the high-temperature and high-pressure gaseous refrigerant to condense it into a high-temperature and high-pressure liquid refrigerant. Here, the heater core 130 is configured to perform heat exchange as air passes through it, and the air passing through the heater core 130 may be heated based on the heat released from the refrigerant.

The heater core 130 may be configured to include a heat exchange part for heat exchange between the refrigerant and the air. Here, the heat exchange part may include at least one heat exchange fin or heat exchange surface, and may enable efficient heat exchange between the air and the refrigerant.

According to an embodiment, the heater core 130 may be configured to have the same or a similar structure as a condenser.

The high-temperature and high-pressure liquid refrigerant that has passed through the heater core 130 may be supplied to the evaporator 140.

The evaporator 140 may exchange heat with the low-temperature and low-pressure liquid refrigerant to convert it into a low-temperature and low-pressure gaseous refrigerant. The low-temperature and low-pressure gaseous refrigerant may be supplied back to the compressor 120 so that the refrigerant can circulate inside the pipe 10.

The blower fan 150 may be located at a front end or a rear end of the heater core 130 and configured to control the flow of air passing through the heater core 130. To explain in more detail, the blower fan 150 may be located at the front end (e.g., air inlet) or the rear end (e.g., air outlet) of the heater core 130 and configured to control the flow of air passing through the heater core 130.

Here, the blower fan 150 may be configured to include at least one fan whose rotation speed (rpm or rps) can be controlled. In addition, information about a controllable minimum rotation speed or maximum rotation speed of each fan configured in the blower fan 150 may be included in a storage (not shown).

In addition, the air conditioning system 100 may be configured with a passage (e.g., a duct) so that the air that has passed through the heater core 130 flows into the interior 11 of the electric vehicle.

The electronic heating element 160 may include at least one of various electronic elements that generate heat, such as a PTC heater (positive temperature coefficient heater), induction heating devices, a thermoelectric heater, infrared heating devices, ceramic heaters, and resistive heating devices such as a nichrome wire or a heating film, and the like.

At this time, the electronic heating element 160 may be arranged such that its heating surface contacts the heater core 130 or contacts the air flowing out from the heater core 130 at the rear end (e.g., air outlet) of the heater core 130.

Here, when the heating surface of the electronic heating element 160 is configured to contact the air flowing out from the heater core 130, the electronic heating element 160 may be arranged in a duct connected to the rear end (e.g., air outlet) of the heater core 130. At this time, the heating surface of the electronic heating element 160 may be configured by forming a hole (e.g., perforation) in a part of one surface of the duct, arranging the heating surface of the electronic heating element 160 to be placed (or inserted) toward the inside of the duct or located inside the duct, and performing a sealing treatment.

The electronic heating element 160 may generate heat on the heating surface based on the control of the processor 110. The generated heat may be transferred to the air inside the duct to heat the air that has passed through the heater core 130.

When the electronic heating element 160 is arranged to contact the heater core 130, the heating surface of the electronic heating element 160 may be arranged to contact the heat exchange part of the heater core 130 to directly heat the heat exchange part.

The flow rate controller 170 may control the flow rate (and/or flow volume) of the refrigerant flowing through the pipe 10. To explain in more detail, the flow rate controller 170 may control the flow rate of the refrigerant passing through the heater core 130. To this end, the flow rate controller 170 may be arranged between the compressor 120 and the heater core 130 to control the flow rate of the refrigerant flowing into the heater core 130.

The flow rate controller 170 may include at least one component among a sensor (e.g., a flow rate sensor) that measures the flow volume or speed of the refrigerant flowing through the pipe 10, a valve, and a pressure regulator.

As described above, the air conditioning system 100 has been described as including the evaporator 140, the compressor 120, the heater core 130, and the blower fan 150, but it may be configured to further include at least one element for refrigerant circulation of the air conditioning system 100.

For example, although not shown in FIG. 1, the air conditioning system 100 may be configured to further include an expansion valve between the heater core 130 and the evaporator 140. The expansion valve 315 may lower (or expand) the pressure of the high-temperature and high-pressure liquid refrigerant to convert it into a low-temperature and low-pressure liquid refrigerant, and supply the converted refrigerant to the evaporator 140.

In addition, a condenser that performs a phase change of the refrigerant compressed from the compressor 120 may be connected between the compressor 120 and the heater core 130.

In addition, the air conditioning system 100 may be configured with at least one heat exchanger 180 between the evaporator 140 and the compressor 120. The heat exchanger 180 may be connected to at least one heat source 190 and configured to transfer heat from the heat source 190 to the refrigerant through the heat exchanger 180.

Here, the heat source 190 may be configured to include at least one of a battery, wiring, a motor, and a transmission. The heat source 190 and the heat exchanger 180 may be connected through at least a part of a heat transfer medium 171, such as a heat pipe, a thermally conductive polymer, a thermal pad, graphene, or thermally conductive rubber.

In addition, the air conditioning system 100 may be configured to include at least one first temperature sensor S1 between the compressor 120 and the heater core 130, which measures the temperature of the refrigerant.

For example, the first temperature sensor S1 may be arranged on the pipe 10 or the heater core 130 and configured to measure the temperature of the refrigerant.

According to an embodiment, at least one first temperature sensor S1 may be provided at a preset position (a first position) of the inlet of the heater core 130.

In addition, the air conditioning system 100 may be configured to include at least one second temperature sensor S2 for measuring the temperature of the air at a preset position (a second position) after passing through the heater core 130.

In addition, the air conditioning system 100 may be configured to include at least one third temperature sensor S3 at a preset position (a third position) inside the interior 11 (passenger cabin) to measure the indoor temperature of the electric vehicle.

Here, the third position may include at least one area of a driver's seat area and a passenger's seat area in the interior 11 of the vehicle. The third temperature sensor S3 may be installed on at least a part of a seat, a vehicle frame, a dashboard, a floor, and a ceiling.

As described above, the processor 110 acquires at least some temperatures among the refrigerant temperature at the first position measured through the first temperature sensor S1, the air temperature at the second position measured through the second temperature sensor S2, and the indoor temperature at the third position measured through the third temperature sensor S3, and may acquire them at preset time intervals or in real time.

Here, two or more of the refrigerant temperature at the first position measured through the first temperature sensor S1, the air temperature at the second position measured through the second temperature sensor S2, and the indoor temperature at the third position measured through the third temperature sensor S3 may be measured simultaneously (or at the same point in time).

For the operation of the air conditioning system 100 configured as described above, the processor 110 is configured to include at least one processor, and may process various data for the operation of the device including the air conditioning system 100 through at least one program (application, tool, plug-in, and the like.).

The processor 110 is connected to at least one component (e.g., compressor 120, heater core 130, evaporator 140, heat exchanger 180, blower fan 150, heat source 190, first temperature sensor S1, second temperature sensor S2, or third temperature sensor S3) included in the air conditioning system 100, and may control the operation of the at least one component.

The processor 110 may execute a program (application, tool, plug-in, and the like.) that controls the operation of the connected components. For example, the processor 110 may control the rotation speed of the compressor 120 and the speed of the refrigerant flowing into the heater core 130 via the flow rate controller 170, or adjust the rotation speed of the blower fan 150 to optimize the overall efficiency of the air conditioning system.

To this end, although not shown in FIG. 1, the air conditioning system 100 may be configured to further include at least one storage (not shown) that includes a program in which the operation of the processor 110 is programmed.

The storage (not shown) may store various data processed by at least one component of the air conditioning system 100. The data may include, for example, a program for processing control commands, data processed through the program, or related input data and output data.

To explain in more detail, the storage (not shown) may include an artificial intelligence algorithm based on at least a part of a neural network algorithm, a blockchain algorithm, a deep learning algorithm, a regression analysis algorithm, and related mechanisms, operators, language models, and big data for processing the control command of the processor 110.

The storage (not shown) may be configured to include volatile memory, non-volatile memory, and/or a computer-readable recording medium as such. At this time, the computer-readable recording medium may store a computer program for performing an operation in which the processor 110 controls the heating of the electric vehicle based on various embodiments of the present disclosure.

In addition, the air conditioning system 100 may further include at least one communication unit (not shown) for communication between the processor 110 and components, or between the processor 110 and an external device of the air conditioning system 100.

The communication unit (not shown) may support the establishment of a wired communication channel, the establishment of a wireless communication channel, and the performance of communication through the established communication channel between internal components of the air conditioning system 100 and/or at least one other external device (e.g., a user device, or a server).

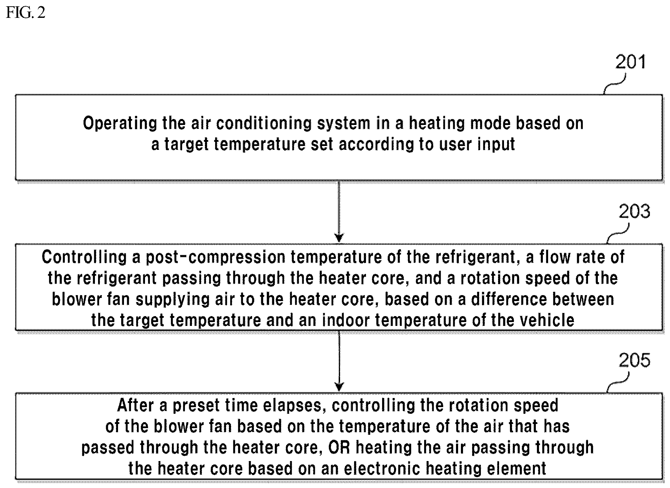

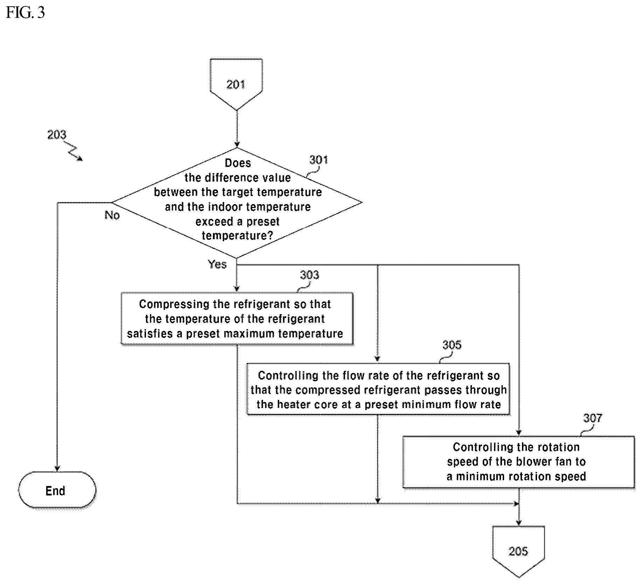

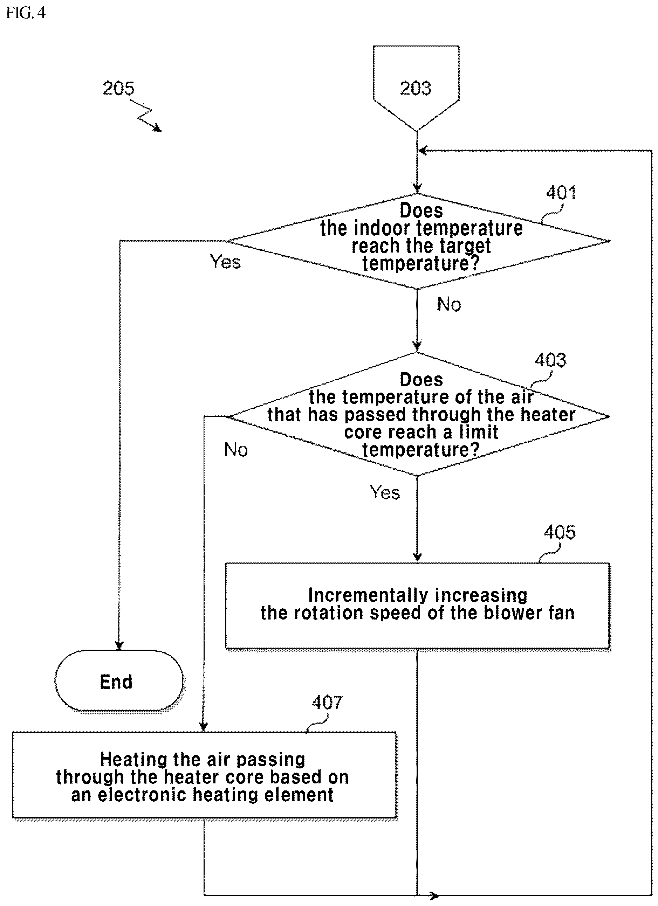

A method for controlling the heating of an electric vehicle based on the air conditioning system described above may be described in detail below. To this end, FIG. 2 illustrates a flow of operations for performing heating control of an electric vehicle in an air conditioning system according to an embodiment of the present disclosure. FIG. 3 illustrates a detailed flow of operations for performing heating control of an electric vehicle in an air conditioning system according to an embodiment of the present disclosure. FIG. 4 illustrates a detailed flow of operations for performing heating control of an electric vehicle in an air conditioning system according to another embodiment of the present disclosure.

In step 201, the processor 110 may operate the air conditioning system in a heating mode based on a target temperature set according to user input. Here, the target temperature may be a desired target temperature for the vehicle interior (e.g., passenger cabin) by operating the air conditioning system.

To explain in more detail, the processor 110 may acquire a user input for setting a target temperature for the vehicle interior 11. For example, the processor 110 may acquire a user input for setting the target temperature through a control panel (not shown) of the air conditioning system 100 located in the vehicle interior 11.

At this time, the processor 110 may confirm the setting of the heating mode based on the user input, or may determine the operation of the heating mode based on a difference value between the target temperature and the vehicle indoor temperature.

For example, when the air conditioning system 100 is switched to an 'on' state, the processor 110 may measure the indoor temperature for the vehicle interior via the third temperature sensor S3. The processor 110 may calculate the difference value between the set target temperature and the indoor temperature, and determine the operation of the heating mode if the indoor temperature is lower than the target temperature.

At this time, the processor 110 may also determine the operation of the heating mode if the indoor temperature is lower than the target temperature and has a temperature difference value that exceeds a preset temperature (a first temperature difference value) (e.g., 5 degrees Celsius (°C)).

In addition, when the air conditioning system 100 is switched to the 'on' state or the target temperature is set, the processor 110 may measure the temperature of the compressed refrigerant via the first temperature sensor S1, or measure the temperature of the air that has passed through the heater core 130 via the second temperature sensor S2.

The processor 110, in measuring at least some temperatures among the temperature of the compressed refrigerant, the temperature of the air that has passed through the heater core 130, and the indoor temperature of the vehicle, may measure them at a specific measurement point in time as described above. However, the processor 110 is not limited thereto, and may measure them thereafter at preset time intervals (at time intervals) or in real time.

In step 203, the processor 110 may control a post-compression temperature of the refrigerant, a flow rate of the refrigerant passing through the heater core, and a rotation speed of the blower fan supplying air to the heater core, based on a difference value between the target temperature and the indoor temperature of the vehicle.

To explain in more detail with reference to FIG. 3, the processor 110 may determine (step 301) whether the difference value between the target temperature and the indoor temperature of the vehicle has a temperature difference value that exceeds a preset temperature (a second temperature difference value (e.g., 10 degrees Celsius (C))).

At this time, if the difference value between the target temperature and the indoor temperature of the vehicle does not exceed the second temperature difference value, the processor 110 may end the embodiment of FIG. 2 (or FIG. 3).

However, if the difference value between the target temperature and the indoor temperature of the vehicle exceeds the second temperature difference value, the processor 110 may compress the refrigerant (step 303) via the compressor 120 so that the temperature of the refrigerant satisfies a preset maximum temperature.

Here, the preset maximum temperature of the refrigerant may be a state in which a specific temperature is preset as the maximum temperature that the refrigerant can reach by being compressed through the compressor 120.

The processor 110 may measure the temperature of the refrigerant being compressed through a temperature sensor included in the compressor 120. The processor 110 may control the compressor 120 to compress the refrigerant until the compressed refrigerant satisfies the preset maximum temperature.

In addition, the processor 110 may control the flow rate of the refrigerant (step 305) so that the compressed refrigerant passes through the heater core at a preset minimum speed.

Here, the preset minimum speed of the refrigerant may be a state in which a specific speed is preset as the speed of the refrigerant flowing into the heater core 130 via the flow rate controller 170.

To explain in more detail, the minimum speed of the refrigerant may be set to a specific value in a range exceeding 0 m/s and not exceeding 15 m/s.

In addition, the minimum speed of the refrigerant may be set differently according to the phase of the refrigerant flowing into the heater core 130 (or flowing out from the compressor 120). For example, if the phase of the refrigerant is gaseous, the minimum speed of the refrigerant controlled via the flow rate controller 170 may be set to a specific value in a range exceeding 5 m/s and not exceeding 15 m/s. Also, if the phase of the refrigerant is liquid, the minimum speed of the refrigerant controlled via the flow rate controller 170 may be set to a specific value in a range exceeding 0.5 m/s and not exceeding 2 m/s.

However, the range for setting the minimum speed when the refrigerant is gaseous or liquid is exemplary, and may be changed within the range exceeding 0 m/s and not exceeding 15 m/s.

As described above, the processor 110 may control the flow rate controller 170 so that the refrigerant flows into the heater core 130 at the preset minimum speed.

In addition, the processor 110 may control the rotation speed of the blower fan to a minimum rotation speed (step 307). To explain in more detail, the processor 110 may control the blower fan 150 so that the fan rotation speed of the blower fan 150 rotates at an operable minimum rotation speed.

Referring to FIG. 3, it is illustrated that the operations of steps 303, 305, and 307 are performed in parallel. However, the operations of steps 303, 305, and 307 may also be operated according to a preset order.

According to an embodiment, the processor 110 may perform the operation of step 303, measure the temperature of the compressed refrigerant flowing out through the compressor 120, and when the temperature of the compressed refrigerant satisfies the preset maximum temperature, perform the operations of steps 305 and 307.

Here, the processor 110 may determine whether to perform steps 305 and 307 based on the temperature of the refrigerant measured through the refrigerant temperature sensor of the compressor 120 and/or the first temperature sensor S1.

However, the processor 110 may perform the operation of step 305 when the temperature of the compressed refrigerant satisfies the preset maximum temperature. At this time, the processor 110 may perform the operation of step 307 if the speed of the refrigerant flowing out through the flow rate controller 170 in the operation of step 305 satisfies the preset minimum speed.

When the processor 110 performs the operations of steps 303, 305, and 307, it may perform step 205.

In step 205, after a preset time elapses, the processor 110 may control the rotation speed of the blower fan based on the temperature of the air that has passed through the heater core, or heat the air passing through the heater core based on an electronic heating element.

To explain in more detail with reference to FIG. 4, the processor 110 may measure the indoor temperature of the vehicle and determine (step 401) whether the indoor temperature has reached the target temperature.

Here, the processor 110 may start the operation of step 401 and determine whether the indoor temperature has reached the target temperature after a preset first time has elapsed.

If the measured indoor temperature has reached the target temperature, the processor 110 may end the embodiment of FIG. 2 (or FIG. 4).

However, if the measured indoor temperature has not reached the target temperature, the processor 110 may determine (step 403) whether the temperature of the air that has passed through the heater core has reached a preset limit temperature.

Here, the preset limit temperature for the air that has passed through the heater core 130 may be a state in which a specific temperature is preset as the maximum temperature that the air flowing into the heater core 130 can reach through heat exchange, based on the operation of step 203.

The processor 110 may perform the operation of step 405 when the temperature of the air that has passed through the heater core 130 reaches the preset limit temperature, and may perform the operation of step 407 when the preset limit temperature has not been reached.

Here, when the processor 110 determines to perform the operation of step 405, it may check the operating state of the electronic heating element 160. The processor 110 may switch the electronic heating element 160 to an 'off' state if the operating state of the electronic heating element 160 is an 'on' state.

According to the description above, it was explained that the processor 110 performs the operation of switching the electronic heating element 160 to the 'off' state in step 405, but it may be performed in step 405.

When the temperature of the air that has passed through the heater core 130 reaches the preset limit temperature, the processor 110 may incrementally increase (step 405) the rotation speed of the blower fan 150.

Here, the rotation speed of the blower fan 150 may be in a state where steps of the rotation speed are divided for each preset rotation speed value or in units of a preset rotation speed value, from a minimum rotation speed to a maximum rotation speed.

Here, each of the rotation speed steps may be set within a range from a minimum rotation speed value to a maximum rotation speed value based on the specification of the blower fan 150.

Here, the rotation speed steps may be in a preset state such that the number increases as the fan's rotation speed gets higher, and the number decreases as the rotation speed gets lower. In addition, the preset rotation speed steps for the blower fan 150 may be in a state of being stored in the storage (not shown).

The processor 110, in step 405, may operate the blower fan 150 at a rotation speed of a step that is higher by a preset step (e.g., 1 step or 2 steps, and the like.) than the rotation speed step of the currently operating blower fan 150.

When the processor 110 performs the operation of step 405, it may perform the operation of step 401 again.

When the temperature of the air that has passed through the heater core 130 has not reached the preset limit temperature, the processor 110 may heat the air passing through the heater core based on an electronic heating element (step 407).

Here, the processor 110 may check the operating state of the electronic heating element 160. The processor 110 may switch the electronic heating element 160 to an 'on' state if the operating state of the electronic heating element 160 is an 'off' state.

When the processor 110 performs the operation of step 407, it may perform the operation of step 401 again. For example, the processor 110 may perform the operation of step 401 when it confirms that the temperature of the air that has passed through the heater core 130 changes (e.g., rises) while the electronic heating element 160 is in the 'on' state.

When the processor 110 performs the operation of step 401 again after performing the operation of step 405 or step 407, it may start the operation of step 401 and determine whether the indoor temperature has reached the target temperature after a second time has elapsed.

Here, the first time and the second time may be in a state of being set to different times. In addition, the second time may be set to be shorter than the first time.

The processor 110, through the operation of step 401, may end the embodiment of FIG. 2 (or FIG. 4) if the measured indoor temperature has reached the target temperature. At this time, the processor 110 may check the operating state of the electronic heating element 160. The processor 110 may switch the electronic heating element 160 to an 'off' state if the operating state of the electronic heating element 160 is an 'on' state.

According to various embodiments, the processor 110, in incrementally increasing the rotation speed of the blower fan 150 in the operation of step 405, may determine whether the rotation speed of the blower fan 150 has reached a rotation speed set by the user (e.g., user-set wind speed or air volume).

At this time, if the rotation speed step of the blower fan 150 needs to be further increased while the rotation speed of the blower fan 150 has reached the user-set rotation speed, the processor 110 may control the flow rate controller 170 to incrementally increase the flow rate of the refrigerant.

Here, the flow rate of the refrigerant may be in a state where steps of the flow rate are divided for each preset speed value or in units of a preset speed value, from a minimum speed to a maximum speed.

Here, each of the speed steps may be set within a range from a minimum speed control value to a maximum speed control value based on the specification of the flow rate controller 170.

Here, the refrigerant flow rate steps may be in a preset state such that the number increases as the moving speed of the refrigerant gets higher, and the number decreases as the moving speed gets lower. In addition, the preset flow rate steps for the refrigerant may be in a state of being stored in the storage (not shown).

The processor 110, in step 405, may control the flow rate at a speed of a step that is higher by a preset step (e.g., 1 step or 2 steps, and the like.) than the flow rate step of the currently moving refrigerant.

Here, when the processor 110 determines to control the flow rate of the refrigerant, it may stop the operation of increasing the rotation speed step of the blower fan 150 and control the flow rate of the refrigerant.

When the processor 110 performs the operation of step 405, it may perform the operation of step 401 again.

According to various embodiments, the processor 110, in incrementally increasing the rotation speed of the blower fan 150 in the operation of step 405, may incrementally decrease the temperature of the refrigerant compressed via the compressor 120, when the rotation speed of the blower fan 150 reaches a rotation speed set by the user (e.g., user-set wind speed or air volume), and the flow rate of the refrigerant reaches a preset maximum flow rate.

Here, the temperature of the refrigerant may be in a state where steps of the temperature are divided for each preset temperature value or in units of a preset temperature value, from a minimum temperature to a maximum temperature.

Here, each of the temperature steps may be set within a range from a minimum temperature value to a maximum temperature value of the refrigerant.

Here, the refrigerant temperature steps may be in a preset state such that the number increases as the temperature of the refrigerant gets higher, and the number decreases as the temperature gets lower. In addition, the preset temperature steps for the refrigerant may be in a state of being stored in the storage (not shown).

The processor 110, in step 405, may control the temperature of the refrigerant to a temperature of a step that is lower by a preset step (e.g., 1 step or 2 steps, and the like.) than the temperature step of the refrigerant compressed via the compressor 120.

Here, when the processor 110 determines to control the temperature of the refrigerant, it may stop the operation of increasing the rotation speed step of the blower fan 150 and the operation of increasing the flow rate of the refrigerant, and control the temperature of the refrigerant compressed via the compressor 120.

When the processor 110 performs the operation of step 405, it may perform the operation of step 401 again.

According to the embodiments described above, the processor 110 may end the embodiment of FIG. 2 (or FIG. 4) if the indoor temperature measured by performing the operation of step 401 has reached the target temperature.

Here, when the measured indoor temperature has reached the target temperature, the processor 110 may adjust the rotation speed of the blower fan 150 to a user-set average rotation speed and then end the embodiment of FIG. 2 (or FIG. 4).

Here, the user-set average rotation speed may be the average speed of the blower fan rotation speeds set by the user. At this time, if the rotation speed of the blower fan at the point when the acquired indoor temperature satisfies the target temperature is the user-set speed, the corresponding rotation speed of the blower fan may be maintained.

Thereafter, the processor 110 may control the temperature of the refrigerant compressed via the compressor 120 and/or the flow rate of the refrigerant via the flow rate controller 170 so that the temperature of the air that has passed through the heater core 130 satisfies the target temperature, while maintaining the user-set average rotation speed (or user-set speed).

According to the embodiments described above, an effect of improving the heat exchange efficiency of the heater core 130 is provided by controlling the flow rate of the refrigerant, the rotation speed of the blower fan 150, or the speed of the refrigerant, based on the temperature of the air heated while passing through the heater core 130 reaching a limit temperature, until the indoor temperature reaches the target temperature.

According to various embodiments, an effect of improving the indoor heating efficiency of an electric vehicle is provided by controlling the operation of the compressor that compresses the refrigerant and the operation of the blower for heat exchange of the heater core, through the method and system for controlling vehicle heating.

According to various embodiments, an effect of allowing the indoor temperature to quickly reach the target temperature is provided by controlling the compression of the refrigerant and the operation of the blower according to the set target temperature, through the method and system for controlling the heating of the air conditioning system.

Although the embodiments have been described thus far with reference to limited drawings, those skilled in the art can apply various technical modifications and variations based on the various embodiments.

For example, even if the described technologies are performed in a different order than the described method, or components of the described system, structure, system, circuit, and the like. are combined or joined in a different form than the described method, or are replaced or substituted by other components or equivalents, appropriate results can be achieved.

Therefore, other implementations, other embodiments, and equivalents to the patent claims also fall within the scope of the claims to be described below.

## Claims

1. A heating control method for a vehicle, wherein the heating control method comprises performing heating control by using a refrigerant,
wherein the refrigerant comprises at least one selected from the group consisting of:
a natural refrigerant;
a hydrofluorocarbon (HFC)-based refrigerant;
a hydrofluoroolefin (HFO)-based refrigerant;
a hydrochlorofluorocarbon (HCFC)-based refrigerant;
a hydrocarbon-based refrigerant that is not a natural refrigerant; and
a halon or a perfluorocarbon (PFC)-based refrigerant

2. The heating control method according to claim 1, wherein the natural refrigerant comprises at least one selected from the group consisting of:
methane (R-50), ammonia (R-717), carbon dioxide (R-744), ethane (R-170), and propane (R-290).

3. The heating control method according to claim 1 or 2, wherein the hydrofluorocarbon (HFC)-based refrigerant is a saturated hydrofluorocarbon (HFC)-based refrigerant and preferably comprises at least one selected from the group consisting of:
difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), and 1,1,1,3,3-pentafluorobutane (R-365mfc).

4. The heating control method according to any one of claims 1 to 3, wherein the hydrofluoroolefin (HFO)-based refrigerant comprises at least one selected from the group consisting of:
1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), and 1,2,3,3,3-pentafluoropropene (R-1225ye).

5. The heating control method according to any one of claims 1 to 4, wherein the hydrochlorofluorocarbon (HCFC)-based refrigerant comprises at least one selected from the group consisting of:
chlorodifluoromethane (R-22), chlorotetrafluoroethane (R-124), and 1-chloro-1,1-difluoroethane (R-142b).

6. The heating control method according to any one of claims 1 to 5, wherein the hydrocarbon-based refrigerant that is not a natural refrigerant comprises at least one selected from the group consisting of:
propylene (R-1270), isobutane (R-600a), dimethyl ether, isopentane, and pentane.

7. The heating control method according to any one of claims 1 to 6, wherein the halon or the perfluorocarbon (PFC)-based refrigerant comprises at least one selected from the group consisting of:
trifluoroiodomethane (R-13I1), octafluoropropane (R-218), and octafluorocyclobutane (RC318).

8. The heating control method according to any one of claims 1 to 7, wherein performing of heating control of the vehicle by using the refrigerant comprises:
operating an air conditioning system in a heating mode based on a target temperature set according to user input;
controlling a post-compression temperature of the refrigerant, a flow rate of the refrigerant passing through a heater core (130), and a rotation speed of a blower fan (150) supplying air to the heater core (130), based on a difference value between the target temperature and an indoor temperature of the vehicle; and
controlling the rotation speed of the blower fan (150) based on a temperature of the air that has passed through the heater core (130), or operating an electronic heating element (160) for heating the air passing through the heater core (130), after a preset time elapses.

9. The heating control method of claim 8, wherein controlling of the post-compression temperature of the refrigerant, the flow rate of the refrigerant passing through the heater core (130), and the rotation speed of the blower fan (150) comprises:
compressing the refrigerant so that the temperature of the refrigerant satisfies a preset maximum temperature;
controlling the flow rate of the refrigerant so that the compressed refrigerant passes through the heater core (130) at a preset minimum flow rate; and
controlling the rotation speed of the blower fan (150) to a minimum rotation speed,
when a difference between the target temperature and the indoor temperature of the vehicle exceeds a preset temperature;
and/or
wherein controlling the rotation speed of the blower fan (150) or operating the electronic heating element (160) comprises:
measuring a temperature of the air that has passed through the heater core (130), after a preset time has elapsed; incrementally increasing the rotation speed of the blower fan (150) when the temperature of the air that has passed through the heater core (130) reaches a limit temperature; and
heating the air passing through the heater core (130) based on an electronic heating element (160) when the temperature of the air that has passed through the heater core (130) has not reached the limit temperature.

10. A heating control system (100) for a vehicle, the system comprising a refrigerant, a compressor (120) and a heater core (130), wherein the system is configured to circulate said refrigerant through the compressor (120) and the heater core (130) to perform heating control of the vehicle;
wherein the refrigerant comprises at least one selected from the group consisting of:
a natural refrigerant;
a hydrofluorocarbon (HFC)-based refrigerant;
a hydrofluoroolefin (HFO)-based refrigerant;
a hydrochlorofluorocarbon (HCFC)-based refrigerant;
a hydrocarbon-based refrigerant that is not a natural refrigerant; and
a halon or a perfluorocarbon (PFC)-based refrigerant.

11. The heating control system (100) of claim 10,
wherein the natural refrigerant comprises at least one selected from the group consisting of:
methane (R-50), ammonia (R-717), carbon dioxide (R-744), ethane (R-170), and propane (R-290);
wherein the hydrofluorocarbon (HFC)-based refrigerant is a saturated hydrofluorocarbon (HFC)-based refrigerant and preferably comprises at least one selected from the group consisting of:
difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), and 1,1,1,3,3-pentafluorobutane (R-365mfc);
wherein the hydrofluoroolefin (HFO)-based refrigerant comprises at least one selected from the group consisting of:
1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene(R-1243zf), 1,1-difluoroethylene(R-1132a), and 1,2,3,3,3-pentafluoropropene (R-1225ye);
wherein the hydrochlorofluorocarbon (HCFC)-based refrigerant comprises at least one selected from the group consisting of:
chlorodifluoromethane (R-22), chlorotetrafluoroethane (R-124), and 1-chloro-1,1-difluoroethane (R-142b);
wherein the hydrocarbon-based refrigerant that is not a natural refrigerant comprises at least one selected from the group consisting of:
propylene (R-1270), isobutane (R-600a), dimethyl ether, isopentane, and pentane;, and/or
wherein the halon or the perfluorocarbon (PFC)-based refrigerant comprises at least one selected from the group consisting of:
trifluoroiodomethane (R-13I1), octafluoropropane (R-218), and octafluorocyclobutane (RC318).

12. The heating control system (100) according to claim 10 or 11, comprising:
a control panel configured to set a target temperature for an interior (11) of the vehicle;
the compressor (120) configured to compress the refrigerant;
a flow rate controller (170) configured to control a flow rate of the refrigerant;
the heater core (130) configured to release heat from the compressed refrigerant;
a blower fan (150) configured to supply air to the heater core (130);
a pipe (10) configured such that the refrigerant is charged in and circulates through the compressor (120) and the heater core (130);
a first temperature sensor (S1) configured to measure a temperature of the compressed refrigerant;
a second temperature sensor (S2) configured to measure a temperature of air released from the heater core (130);
a third temperature sensor (S3) configured to measure an indoor temperature of the vehicle; and
a processor (110) configured to: operate an air conditioning system of the vehicle in a heating mode based on the target temperature set according to user input, control a post-compression temperature of the refrigerant, the flow rate of the refrigerant passing through the heater core (130), and a rotation speed of the blower fan (150), based on a difference value between the target temperature and the indoor temperature measured via the third temperature sensor (S3), and control the rotation speed of the blower fan (150) based on the temperature of the air that has passed through the heater core (130), or operate an electronic heating element (160) for heating the air passing through the heater core (130), after a preset time elapses;
preferably. wherein the processor (110) is further configured to:
compress the refrigerant via the compressor (120) so that the temperature of the refrigerant satisfies a preset maximum temperature;
control the flow rate of the refrigerant via the flow rate controller (170) so that the compressed refrigerant passes through the heater core (130) at a preset minimum flow rate; and
control the rotation speed of the blower fan (150) to a minimum rotation speed,
when a difference between the target temperature and the indoor temperature of the vehicle exceeds a preset temperature.

13. The heating control system according to claim 12, further comprising an electronic heating element (160) configured to heat the air that has passed through the heater core (130);
wherein the processor (110) is further configured to:
measure a temperature of the air that has passed through the heater core (130) via the second temperature sensor (S2), after a preset time has elapsed;
incrementally increase the rotation speed of the blower fan (150) when the temperature of the air that has passed through the heater core (130) reaches a limit temperature; and
heat the air passing through the heater core (130) based on the electronic heating element (160) when the temperature of the air that has passed through the heater core (130) has not reached the limit temperature.

14. Use of a heating control method as defined in any one of claims 1 to 9 in an electric vehicle.

15. An electric vehicle, comprising the heating control system as defined in any one of claims 10 to 13.
